Europäisches Patentamt

(19) European Patent Office

Office européen des brevets

(11) Publication number: **0 079 961**
**B1**

(12) **EUROPEAN PATENT SPECIFICATION**

(45) Date of publication of patent specification: **03.09.86**

(21) Application number: **82902217.7**

(22) Date of filing: **25.05.82**

(86) International application number:
**PCT/US82/00722**

(87) International publication number:
**WO 82/04223 09.12.82 Gazette 82/29**

(51) Int. Cl.⁴: **B 32 B 5/12, B 32 B 5/16, B 32 B 21/02, B 32 B 21/04, B 32 B 31/04**

(54) **COMPOSITE WOOD PANEL.**

(30) Priority: **26.05.81 US 267057**

(43) Date of publication of application:
**01.06.83 Bulletin 83/22**

(45) Publication of the grant of the patent:
**03.09.86 Bulletin 86/36**

(84) Designated Contracting States:
**AT CH DE FR LI LU NL SE**

(56) References cited:
**US-A-1 387 011**
**US-A-2 356 625**
**US-A-2 744 044**
**US-A-3 616 128**
**US-A-3 715 257**
**US-A-4 086 382**

(73) Proprietor: **ROBBINS, Earl Herbert**
**310 Garfield Street**
**Eugene, OR 97401 (US)**

(72) Inventor: **ROBBINS, Earl Herbert**
**310 Garfield Street**
**Eugene, OR 97401 (US)**

(74) Representative: **Daley, Michael John et al**
**F. J. CLEVELAND & COMPANY**
**40/43 Chancery Lane**
**London, WC2A 1JQ (GB)**

Courier Press, Leamington Spa, England.

## Description

This invention relates generally to wood panels having improved dimensional stability and, more particularly, to composite laminated panels having wood veneer surfaces adapted to be used as structural panels or as components of furniture or similar articles made from wood.

It has been proposed before to manufacture plywood having a plurality of adhesively bonded wood veneer laminae for use in the construction of buildings. It has been proposed also to make composite wood panels having surface wood veneer sheets and a core of lignocellulose or the like particles adhesively bonded together to form a mat which is disposed as a core between the veneer sheets and adhesively bonded thereto. One of the problems inherent in prior art panels is lateral expansion of the panel across the grain as the panel absorbs moisture which causes warping and buckling of the panel. Expansion of the panel in the direction of the grain is negligible.

A composition board panel having wood veneer or cardboard exterior surfaces cemented to fiber board or boxboard intermediate layers and a wire mesh reinforcement is disclosed, for example, in U.S. Patent No. 1,387,011. A building plate composed of exterior veneer sheets and a core of bonded wood sawdust is disclosed in U.S. Patent No. 2,356,625. The two exterior veneer sheets are disposed with the grains of the veneer sheets extending in the same direction. Longitudinally spaced veneer strips are adhesively bonded directly to the inside faces of the veneer sheets with the grain of the strips substantially perpendicular to the grain of the veneer sheets. While the veneer strips restrain lateral expansion somewhat and reduce accompanying warping and buckling of the panel as moisture is absorbed from the air, such plates have not been accepted to any great extent commercially because, inter alia, the product is not a completely balanced product. In one embodiment of the disclosed plate, the plate has in addition to the two surface veneer sheets a centralized third veneer sheet having its grain parallel to the grains of the surface sheets. The composite wood panel disclosed in U.S. Patent No. 3,616,128 has a wood particle board core and face and back veneer plies adhesively bonded thereto. The grain of one of the surface veneers is perpendicular to the grain of the other facing veneer sheet to provide dimensional stability but the panel is not sufficiently dimensionally stable for many purposes.

It is an object of this invention to provide a panel having face and back veneer sheets and a mat of adhesively bonded biomass particles such as lignocellulose particles as a core which panel has improved dimensional stability and can be made on conventional apparatus at a commercially acceptable production rate. Another object of the invention is to provide a balanced laminated wood panel having wood veneer surface plies and a core of lignocellulose particles adhesively bonded into a mat and adhesively bonded face to face to the veneer plies. A still further object of the invention is to provide a process for making a dimensionally stable laminated wood panel having a core formed of adhesively bonded lignocellulose or similar biomass particles.

Other objects will become apparent from the following description with reference to the accompanying drawing wherein

Figure 1 is a perspective view of one embodiment of the wood panel provided by the invention with parts broken away for the purpose of illustrating various laminae of the composite panel;

Figure 2 is a partial end view of the embodiment illustrated in Figure 1; and

Figure 3 is a flow sheet illustrating steps of an embodiment of the process provided by the invention.

The foregoing objects and others are accomplished in accordance with this invention, generally speaking, by providing a composite wood panel having improved dimensional stability with variation of humidity in the ambient air about the panel and absorption of moisture by the panel, the panel comprising exposed wood veneer sheets and a core comprising a mat of lignocellulose or similar biomass particles adhesively bonded together and bonded to the face and back wood veneer sheets and to an intermediate veneer sheet coextensive with the exposed veneer sheets, and centrally disposed between the face and back veneer sheets which separates the core into two substantially equal thicknesses, the grain of the intermediate veneer sheet being disposed substantially perpendicularly to the grain in the two exposed veneer sheets. Such a panel can be fabricated on existing equipment used for making plywood and/or particle boards at a production rate which is acceptable in commercial production.

In one embodiment of the process provided by the invention, a first veneer sheet is placed on a caul plate, a layer of wood particles such as sawdust mixed with a suitable resinous adhesive is disposed on the veneer sheet on the caul plate, a second wood veneer sheet is disposed on the blend of wood particles and adhesive, a second layer of a blend of wood particles and adhesive is spread over the second veneer sheet and then a third veneer sheet is placed on the second layer of wood particles. The resulting composite is heated and pressed between platens of a conventional press used in making particleboard, hardboard and the like to activate the adhesive, bond the particles together and bond the resulting particle layer or mat to the faces of the adjacent veneer sheets and thereby form a substantially rigid unitary panel adapted to be used as a structural member in the construction of a building or the like.

In preferred embodiments of the process, the assembly is heated in the press to a temperature of about 300°F to 350°F (approx. 150°—180°C) or higher and is pressed under a pressure of from about 300 to about 450 lbs per sq. inch (approx.

2.1 to approx. 3.1 MN/m²) or higher. During pressing the exposed veneer sheets are preferably compressed in thickness sufficiently to provide a substantially smooth surface thereby reducing the necessity of sanding. or otherwise finishing the surface of the panel. From about 5% to about 10% by weight, dry basis, of a suitable adhesive such as an aqueous emulsion containing phenol formaldehyde resin, urea formaldehyde resin or melamine formaldehyde resin or a binder which chemically reacts with cellulose such as an organic polyisocyanate polymer is mixed with the biomass particles before the particles are laid on the veneer strip. Of the various organic polyisocyanates available commercially, polymers of diphenyl methane diisocyanates such as Mondur (Registered Trade Mark) MR available from the Mobay Chemical Company, Pittsburgh, Pennsylvania or Pappi (Registered Trade Mark), available from UpJohn Chemical Co. may be used.

The panel can be made from any suitable wood veneers such as Douglas fir or pine, or if the panel is to be used in making cabinets or other types of furniture, the surface veneers may be oak, mahogany, walnut or other suitable wood. A paper, ornamental wood or plastic sheet may be substituted for the surface veneer sheets or may be adhesively bonded to the exposed surfaces of the wood veneer sheets or the assembly of laminae can be pressed to form the panel under a pressure at which lignin in the wood veneer exudes to the surface and spreads thereover to form a substantially smooth surface. In one embodiment the intermediate veneer is bonded to the mat of particles with a polyisocyanate to avoid the use of water in the adhesive.

It has been found that a panel in which the surface veneers have their grains parallel to each other and an intermediate centrally disposed veneer sheet has its grain substantially perpendicular to the grains of the exposed veneer sheets is more dimensionally stable than a panel having exposed veneer sheets with grains extending in the same direction and having strips of veneer having the grain disposed at substantial right angles to the grain in the veneer sheet bonded directly to the inside surface of the veneer sheet. Also, the panel provided by the invention is more stable than a panel of only two veneer sheets with the grain of one sheet substantially perpendicular to the grain in the opposite veneer sheet. Moreover, the intermediate veneer sheet can be of a lower grade of wood such as white spec veneer or from a specie of low commercial value such as cottonwood. The thicknesses of the veneer sheets used may be varied as to availability and depending upon the strength and structural requirements.

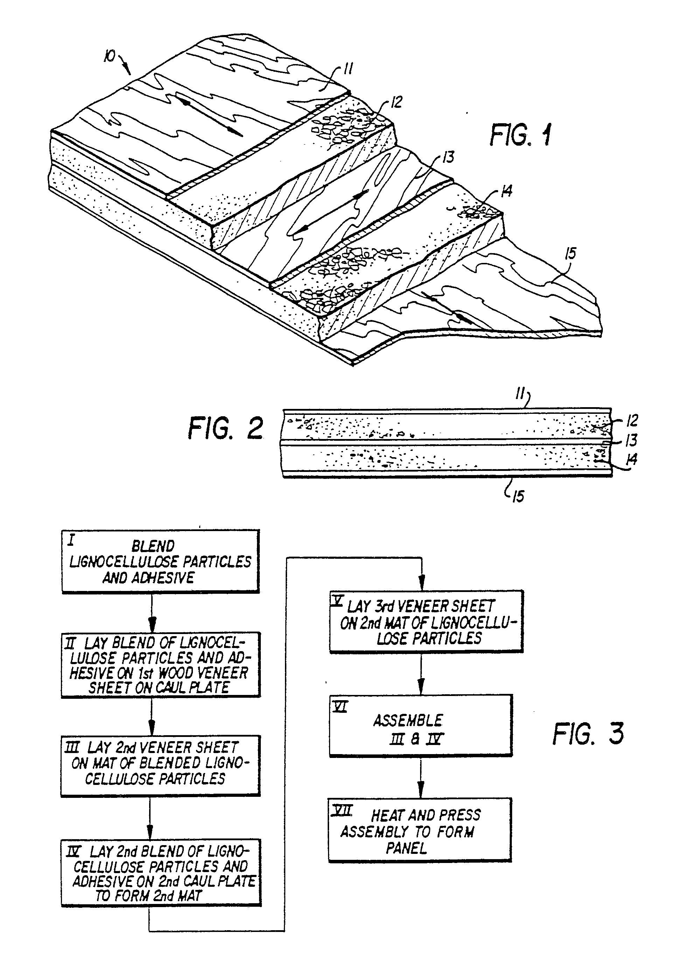

Referring now to Figures 1 and 2 of the drawing, the wood panel 10 provided by the invention has an exposed Douglas fir veneer sheet 11 adhesively bonded with phenol formaldehyde to a mat containing sawdust particles 12 bonded to each other with the same resin. The mat 12 is bonded on its opposite face to a Douglas fir veneer sheet 13. Veneer sheet 13 is bonded on its opposite face to a second mat of bonded sawdust particles 14 which in turn has its opposite face bonded to a second exposed Douglas fir veneer sheet 15.

The embodiment of the process illustrated by flow sheet in Figure 3 of the drawing involves mixing about 6½% by weight (dry basis) of aqueous emulsion containing phenol formaldehyde resin with wood shavings having a particle size in one dimension which is less than the thickness of the mat to be produced. The resulting blend of adhesive and sawdust particles is spread over the surface of a veneer sheet such as 15 illustrated in Figure 2 to form a mat 14. A second veneer sheet 13 is laid on the mat 14 and a second layer of blended phenol formaldehyde adhesive and sawdust particles is laid on veneer sheet 13. A third veneer sheet 11 which is coextensive with sheets 13 and 15 is then placed face to face with mat 12 and the assembly is placed between two heated platens where it is heated to a temperature of about 300°F to 350°F (approx. 150°—180°C) or higher and pressed at a pressure of about 300 to 450 psi (approx. 2.1 to 3.1 MN/m²). The phenol formaldehyde resin melts and then thermosets or cures bonding the wood particles and wood veneer sheets together to form a rigid composite of coextensive wood veneers and wood particle layers. The resulting panel can be used for siding, subflooring or as a foundation for a roof of a building or for other structural or industrial purposes. Preferably the panel has a thickness of from about 1/2″ (approx. 13 mm) to about 1-1/8″ (approx. 29 mm).

While any thermosetting resin such as urea formaldehyde or melamine formaldehyde can be substituted for the phenol formaldehyde in making the panel, urea formaldehyde is seldom used in panelling to be used in structures where the panelling will be exposed to the weather.

The thickness of the veneer sheet 13 required to impart dimensional stability to the panel may vary with the thickness of the panel and the thicknesses of the veneer sheets 11 and 15. So far, it has been found advantageous to provide a veneer sheet for the intermediate veneer sheet 13 which is about 1/10 inch (approx. 2.5 mm) or more thick for panels which are about 1/2 inch (approx. 13 mm) thick and have wood veneers 11 and 15 about 0.1 inch (approx. 2.5 mm) thick each. In panels which are about 5/8 inch (approx. 16 mm) thick having similar surface and intermediate veneer thicknesses, the thickness of the intermediate veneer is preferably at least about 1/10 inch (approx. 2.5 mm). In a panel about 3/4 inch (approx. 19 mm) thick, the thickness of the intermediate veneer sheet can be increased to 1/8 inch (approx. 3 mm) to about 1/6 inch (approx. 4 mm) or more. In general, the thickness of the intermediate veneer sheet 13 need not be any thicker than the thickness of one of the veneer sheets and can be less sometimes than the thickness of either sheet 11 or 15 to restrain expansion of the panel in a direction across the grains of the veneer sheets 11 and 15 upon absorption of moisture with accompanying warping and buckling of the panel.

While lignocellulose particles including wood sawdust have been used principally in the foregoing description for the sake of simplification, it is to be understood that any suitable biomass particles including wood shavings, wood flakes, bagasse, peat, and ground wood particles may be used to make the mats of the core of the panel but wood particles are preferred. The flakes and other elongate particles bonded together to form the mats of the core may be oriented by conventional electronic means such as in the direction of the grain of the intermediate veneer sheet to further restrain undesirable expansion across the grain of the surface veneer sheets. Strengthening fibers such as fiber glass may be mixed with the biomass particles for additional strength.

The thickness of the particle mats of the core is to be sufficient to fill the space between a surface veneer and the intermediate veneer sheet and may vary from about 1/8 inch (approx. 3 mm) to about 1/2 inch (approx. 13 mm) after pressing depending upon the thickness of the panel and will usually be at least about twice the thickness of the exposed veneer sheets.

## Claims

1. A dimensionally stable laminated wood panel (10) having facing exposed wood veneer sheets (11, 15) disposed with the grain in one exposed wood veneer sheet (11) substantially parallel with the grain in the other exposed wood veneer sheet (15) characterized in that a third wood veneer sheet (13) substantially coextensive with said exposed wood veneer sheets (11, 15) is centrally disposed between the exposed wood veneer sheets (11, 15) with the grain thereof disposed at an angle across the grain of the exposed wood veneer sheets (11, 15) and a mat (12, 14) comprising adhesively bonded biomass particles fills the space between the said third wood veneer sheet (13) and each exposed wood veneer sheet (11, 15) and is adhesively bonded thereto, the third veneer sheet (13) restraining swelling of the panel (10) in a direction across the grains of the exposed wood veneer sheets (11, 15).

2. The panel (10) of Claim 1 characterized in that each of the wood veneer sheets (11, 15) exposed on the surface of the panel (10) is about 1/20 (approx. 1.3 mm) to about 1/8 inch (approx. 3 mm) thick and the third wood veneer sheet (13) is about 1/10 (approx. 2.5 mm) to about 3/16 inch (approx. 5 mm) thick.

3. The panel (10) of Claim 1 characterized in that the particles bonded together to form the mats (12, 14) are lignocellulose particles.

4. The panel (10) of Claim 1 characterized in that said particles are bonded together with a polymeric organic polyisocyanate and to the third wood veneer sheet (13).

5. The panel (10) of Claim 1 characterized in that the said mats (12, 14) are bonded to the exposed wood veneer sheets (11, 15) with a phenol formaldehyde resin.

6. The panel of Claim 1 characterized in that a strengthening synthetic resin fiber is mixed with said biomass particles.

7. The panel of Claim 6 characterized in that the said fibers are fiberglass.

8. The panel (10) of Claim 1 characterized in that the particles of the mats (12, 14) are bagasse.

9. A process for making a structural composite wood panel (10) which comprises assembling face to face first and second wood veneer sheets (11, 15) having the grains thereof disposed in substantially the same direction characterized in that a third veneer sheet (13) substantially coextensive with the first and second sheets (11, 15) is centrally disposed therebetween with its grain substantially perpendicular to the grains of the first and second veneer sheets (11, 15) and, between the third veneer sheet (13) and each of the first and second veneer sheets (11, 15), a mass of biomass particles blended with particles of a thermosetting resinous or chemically reactive adhesive is disposed, and the resulting assembly is heated and pressed to cure the adhesive to bond the particles together and to bond the resulting mats (12, 14) thereof to adjacent faces of the three veneer sheets (13).

10. The process of Claim 9 characterized in that the assembly is heated and pressed between platens at a temperature of about 300°F to 350°F (approx. 150°—180°C) or higher at a pressure of at least about 300 psi (approx. 2.1 MN/m$^2$) to about 450 psi (approx. 3.1 MN/m$^2$) or higher.

11. The process of Claim 10 characterized in that the adhesive is phenol formaldehyde.

12. The process of Claim 10 characterized in that the adhesive is an organic polyisocyanate.

## Patentansprüche

1. Formstabiles, laminiertes Holzpaneel (10) mit sich zugekehrten, freiliegenden Holzfurnierplatten (11, 15), die so angeordnet sind, daß die Faserrichtung in einer freiliegenden Holzfurnierplatte (11) im wesentlichen parallel zu der Faserrichtung in der anderen freiliegenden Holzfurnierplatte (15) ist, dadurch gekennzeichnet, daß eine im wesentlichen gleich weit wie die freiliegenden Holzfurnierplatten (11, 15) sich erstreckende dritte Holzfurnierplatte (13) mittig zwischen den freiliegenden Holzfurnierplatten (11, 15) angeordnet ist, wobei deren Fasern in einem Winkel quer zu den Fasern der freiliegenden Holzfurnierplatten (11, 15) angeordnet sind, und eine Matte (12, 14) die zusammengeklebte Biomassenteilchen aufweist, den Raum zwischen der dritten Holzfurnierplatte (13) und jeder freiliegenden Holzfurnierplatte (11, 15) ausfüllt und an sie geklebt ist, wobei die dritte Furnierplatte (13) das Ausbauchen des Paneels in einer quer zu den Fasern der freiliegenden Holzfurnierplatten (11, 15) verlaufenden Richtung eindämmt.

2. Paneel (10) nach Anspruch 1, dadurch gekennzeichnet, daß jede Holzfurnierplatte (11, 15), die an der Oberfläche des Paneels (10) freiliegt, ungefähr 1/20 (ungefähr 1,3 mm) bis ungefähr 1/8 Zoll (ungefähr 3 mm) dick ist und die dritte Holzfurnierplatte (13) ungefähr 1/10 (ungefähr 2,5 mm) bis ungefähr 3/16 Zoll (ungefähr 5 mm) dick ist.

3. Paneel (10) nach Anspruch 1, dadurch gekennzeichnet, daß die zum Bilden der Matten (12, 14) zusammengeklebten Teilchen Lignozelluloseteilchen sind.

4. Paneel (10) nach Anspruch 1, dadurch gekennzeichnet, daß die Teilchen mit einem polymeren, organischen Polyisocyanat zusammengeklebt und an die dritte Holzfurnierplatte (13) geklebt sind.

5. Paneel (10) nach Anspruch 1, dadurch gekennzeichnet, daß die Matten (12, 14) an die freiliegenden Holzfurnierplatten (11, 15) mit einem Phenolformaldehydharz geklebt sind.

6. Paneel nach Anspruch 1, dadurch gekennzeichnet, daß eine verstärkende Kunstharzfaser mit den Biomassenteilchen vermischt ist.

7. Paneel nach Anspruch 6, dadurch gekennzeichnet, daß die Fasern Glasfasern sind.

8. Paneel (10) nach Anspruch 1, dadurch gekennzeichnet, daß die Teilchen der Matte (12, 14) Bagasse sind.

9. Verfahren zum Herstellen eines Bauverbundholzpaneels (10), das das Zusammenbauen von einer ersten und einer zweiten Holzfurnierplatte (11, 15) mit einander zugekehrten Seiten umfaßt, deren Fasern im wesentlichen in derselben Richtung angeordnet sind, dadurch gekennzeichnet, daß eine dritte Furnierplatte (13), die sich im wesentlichen gleich weit wie die erste und zweite Platte (11, 15) erstreckt, mittig dazwischen angeordnet ist, wobei ihre Fasern im wesentlichen senkrecht zu den Fasern der ersten und zweiten Furnierplatte (11, 15) verlaufen, und zwischen der dritten Furnierplatte (13) und einer jeden der ersten und zweiten Furnierplatten (11, 15) eine Masse aus Biomassenteilchen, die mit Teilchen eines wärmeaushärtenden, harzförmigen oder chemisch reaktionsfähigen Klebstoffes vermischt sind, angeordnet ist, und der sich ergebende Zusammenbau erhitzt und gepreßt wird, um den Klebstoff auszuhärten, um die Teilchen zusammenzukleben und die sich daraus ergebenden Matten (12, 14) an die angrenzenden Flächen der drei Furnierplatten (13) zu kleben.

10. Verfahren nach Anspruch 9, dadurch gekennzeichnet, daß der Zusammenbau zwischen Druckplatten bei einer Temperatur von ungefähr 300°F bis 350°F (ungefähr 150° bis 180°C) oder höher bei einem Druck von mindestens ungefähr 300 Pfund pro Quadratzoll (ungefähr 2,1 MN/m²) bis ungefähr 450 Pfund pro Quadratzoll (ungefähr 3,1 MN/m²) oder höher erhitzt und gepreßt wird.

11. Verfahren nach Anspruch 10, dadurch gekennzeichnet, daß der Klebstoff Phenolformaldehyd ist.

12. Verfahren nach Anspruch 10, dadurch gekennzeichnet, daß der Klebstoff ein organisches Polyisocyanat ist.

## Revendications

1. Panneau (10) de bois stratifié de dimensions stables ayant sur ses faces apparentes des feuilles de placage en bois (11, 15) disposées de manière que les fibres d'une feuille de placage en bois apparente (11) soient sensiblement parallèles aux fibres de l'autre feuille de placage en bois apparente (15), caractérisé en ce que une troisième feuille de placage en bois (13) sensiblement parallèle auxdites feuilles de placage en bois apparentes (11, 15) est disposée au centre entre les feuilles de placage en bois apparentes (11, 15), ses fibres faisant un angle avec les fibres des feuilles de placage en bois apparentes (11, 15), et en ce qu'un matelas (12, 14) comprenant des particules de biomasse collées remplit l'espace entre ladite troisième feuille de placage en bois (13) et chaque feuille de placage en bois apparente (11, 15) et est collé à celles-ci, la troisième feuille de placage (13) empêchant le gonflement du panneau (10) dans une direction transversale par rapport aux fibres des feuilles de placage en bois apparentes (11, 15).

2. Panneau (10) conforme à la revendication 1, caractérisé en ce que chacune des feuilles de placage en bois (11, 15) apparentes à la surface du panneau (10) a une épaisseur d'environ 1/20 (approximativement 1,3 mm) à environ 1/8 pouce (approximativement 3 mm) et en ce que la troisième feuille de placage en bois (13) a une épaisseur d'environ 1/10 (approximativement 2,5 mm) à environ 3/16 pouce (approximativement 5 mm).

3. Panneau (10) conforme à la revendication 1, caractérisé en ce que les particules collées entre elles pour constituer les matelas (12, 14) sont des particules de lignocellulose.

4. Panneau (10) conforme à la revendication 1, caractérisé en ce que lesdites particules sont collées entre elles et à la troisième feuille de placage en bois (13) grâce à un polyisocyanate organique polymère.

5. Panneau (10) conforme à la revendication 1, caractérisé en ce que lesdits matelas (12, 14) sont collés aux feuilles de placage en bois apparentes (11, 15) grâce à une résine phénol-formaldéhyde.

6. Panneau conforme à la revendication 1, caractérisé en ce qu'une fibre de résine synthétique de renforcement est mélangée auxdites particules de biomasse.

7. Panneau conforme à la revendication 6, caractérisé en ce que lesdites fibres sont des fibres de verre.

8. Panneau (10) conforme à la revendication 1, caractérisé en ce que les particules des matelas (12, 14) sont de la bagasse.

9. Procédé de fabrication d'un panneau composite de construction en bois (10) comprenant l'assemblage face à face d'une première et d'une deuxième feuille de placage en bois (11, 15) dont les fibres sont disposées sensiblement dans la même direction, caractérisé en ce que l'on dispose au centre entre ces feuilles une troisième feuille de placage (13) sensiblement parallèle aux première et deuxième feuilles de placage (11, 15), les fibres de cette troisième feuille de placage (13) étant sensiblement perpendiculaires aux fibres des première et deuxième feuilles de placage (11, 15), en ce que l'on dispose, entre la troisième feuille de placage (13) et chacune des première et deuxième feuilles de placage (11, 15) une masse de particules de biomasse mélangées à des particules d'un adhésif résineux thermodurcissable ou chimiquement réactif, et en ce que l'on chauffe et l'on presse l'ensemble obtenu pour polymériser l'adhésif afin de lier les particules entre elles et lier les matelas obtenus (12, 14) avec ces particules aux faces adjacentes des trois feuilles de placage (13).

10. Procédé conforme à la revendication 9, caractérisé en ce que l'ensemble est chauffé et pressé entre des plateaux à une température égale ou supérieure à environ 300°F à 350°F (approximativement 150 à 180°C) à une pression d'au moins 300 p.s.i. environ (approximativement 2,1 MN/m²) jusqu'à environ 450 p.s.i. (approximativement 3,1 MN/m²) ou au-delà.

11. Procédé conforme à la revendication 10, caractérisé en ce que l'adhésif est le phénol formaldéhyde.

12. Procédé conforme à la revendication 10 caractérisé en ce que l'adhésif est un polyisocyanate organique.

FIG. 1

FIG. 2

Flow chart (FIG. 3):

I — BLEND LIGNOCELLULOSE PARTICLES AND ADHESIVE

II — LAY BLEND OF LIGNOCELLULOSE PARTICLES AND ADHESIVE ON 1st WOOD VENEER SHEET ON CAUL PLATE

III — LAY 2nd VENEER SHEET ON MAT OF BLENDED LIGNOCELLULOSE PARTICLES

IV — LAY 2nd BLEND OF LIGNOCELLULOSE PARTICLES AND ADHESIVE ON 2nd CAUL PLATE TO FORM 2nd MAT

V — LAY 3rd VENEER SHEET ON 2nd MAT OF LIGNOCELLULOSE PARTICLES

VI — ASSEMBLE III & IV

VII — HEAT AND PRESS ASSEMBLY TO FORM PANEL

FIG. 3

1